(19) Europäisches Patentamt
European Patent Office
Office européen des brevets

(11) Veröffentlichungsnummer: **0 320 440 B1**

(12) **EUROPÄISCHE PATENTSCHRIFT**

(45) Veröffentlichungstag der Patentschrift: **21.04.93**

(51) Int. Cl.$^5$: **C01B 3/38**

(21) Anmeldenummer: **88730276.8**

(22) Anmeldetag: **06.12.88**

(54) **Vorwärmung von Kohlenwasserstoff/Wasserdampf-Gemischen.**

(30) Priorität: **07.12.87 IT 4868187**

(43) Veröffentlichungstag der Anmeldung:
**14.06.89 Patentblatt 89/24**

(45) Bekanntmachung des Hinweises auf die Patenterteilung:
**21.04.93 Patentblatt 93/16**

(84) Benannte Vertragsstaaten:
**BE DE FR GB IT NL**

(56) Entgegenhaltungen:
**EP-A- 0 231 683**
**WO-A-80/01065**
**US-A- 4 642 272**
**US-A- 4 666 680**

(73) Patentinhaber: **MANNESMANN Aktiengesellschaft**
**Mannesmannufer 2**
**W-4000 Düsseldorf 1(DE)**

Patentinhaber: **KTI GROUP B.V.**
**Bredewater 26**
**NL-2715 CA Zoetermeer(NL)**

(72) Erfinder: **Giacobbe, Francesco**
**Via Giulio Aristide Sartorio 147**
**I-00147 Rome(IT)**

(74) Vertreter: **Meissner, Peter E., Dipl.-Ing. et al**
**Meissner & Meissner, Patentanwaltsbüro,**
**Hohenzollerndamm 89**
**W-1000 Berlin 33 (DE)**

EP 0 320 440 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur kontinuierlichen Erzeugung und Vorerhitzung eines Kohlenwasserstoff/Wasserdampf-Gemisches als Einsatzstoff für einen Reforming-Prozeß zur Herstellung von Wasserstoffgas oder Synthesegas (Reformerprodukt), sowie einen Wärmeaustauscher zur Durchführung dieses Verfahrens.

Es ist bekannt, Wasserstoffgas oder wasserstoffreiches Synthesegas in einem Reformer, der einen geeigneten Katalysator enthält, aus einem Gemisch aus Kohlenwasserstoffgas (z. B. $CH_4$) und Wasserdampf zu erzeugen. Das Kohlenwasserstoffgas/Wasserdampf-Gemisch wird bei einer Temperatur von etwa 400 bis 500 Grad C und einem Druck bis zu 40 bar in den Reformerreaktor eingeführt. Im Reaktor wird die Temperatur bis zu Werten von 750 bis 900 Grad C in Abhängigkeit vom Druck erhöht und ein wasserstoffreiches Gas erzeugt. Die dabei stattfindende Reaktion ist endothermisch und verlangt daher eine Wärmezufuhr. Beim Einsatz von Methan als Kohlenwasserstoffgas gilt:

$$CH_4 + H_2O \rightleftharpoons CO + 3H_2$$

Der Wasserstoffgehalt hängt vom Überschuß des zugeführten Wasserdampfes und von der Temperatur und dem Druck des Reformers ab. Ein Ansteigen des Wasserdampfüberschusses und der Reformertemperatur bewirkt eine Zunahme der Wasserstoffgewinnung, während eine Druckerhöhung eine Abnahme derselben zur Folgt hat. Je nach den Reaktionsbedingungen und dem Wasserdampfüberschuß erhält man ein wasserstoffreiches Gas, welches außerdem noch CO, $CO_2$, überschüssigen Wasserdampf, der keine Reaktion hatte, und einen Rest von nicht umgeformten Methan enthält, und zwar ist dieser Rest umso größer, je höher der Druck und je niedriger die Reformertemperatur ist.

Bei der industriellen Erzeugung von Wasserstoff- und Synthesegas erfolgte die Reaktion der Reformierung in vertikalen Rohren, die den Katalysator enthalten und in die Strahlenzone eines Ofens eingetaucht sind. In Anbetracht der hohen Reformertemperatur ist der thermische Wirkungsgrad in der Strahlenzone gering. Es wird nur ungefähr 50 bis 60 % der dem Ofen durch den verbrannten Brennstoff zugeführten Wärmeenergie genutzt.

Falls die Erzeugung von CO-Gas nicht interessiert, kann dieses in einem nachgeschalteten Reaktor auf einem anderen Katalysator zur Reaktion gebracht werden, um die Wasserstoffgewinnung gemäß der Reaktion

$$CO + H_2O \rightleftharpoons CO_2 + H_2$$

weiter zu erhöhen. Diese Reaktion ist exotherm, und ihr Gleichgewicht wird nicht vom Druck beeinflußt. Die Umwandlung von CO in Wasserstoff ist umso vollständiger, je niedriger die Umwandlungstemperatur ist. Je nach dem verwendeten Katalysator liegt die Konvertierungstemperatur in den Bereichen von etwa 350 bis 450 Grad C und etwa 200 bis 250 Grad C. Deshalb muß des Reformerprodukt vor der CO-Konvertierung auf entsprechende Temperaturen von 350 bis 200 Grad C abgekühlt werden.

Daraus ergibt sich, daß die Wärmemengen, die aufgrund des geringen thermischen Wirkungsgrades des Reformers in den Verbrennungsabgasen des Ofens und die im Reformerprodukt enthalten sind, sowie die bei der CO-Konvertierung entstehende Wärme den Wärmebedarf für die Dampferzeugung und die Vorerhitzung der Ladung des Reformers, d. h. des einzusetzenden Wasserstoffgas/Wasserdampf-Gemisches überschreiten. Um diesen verfügbaren Wärmeüberschuß nicht zu verlieren, wird er, sofern es der Standort der Anlage zuläßt, dazu benutzt, eine zusätzliche Menge von Dampf zu erzeugen, die aus der Anlage abgeleitet wird. Da eine derartige Dampfableitung selbstverständlich nur bei Vorhandensein entsprechender Abnehmer sinnvoll ist, wurde in den letzten Jahren ein Regenerierungsreformer entwickelt, in dem ein Teil der Wärme des Reformerproduktes direkt für die Reformerreaktion verwendet wird, wodurch die Wärmemenge reduziert wird, die in der Strahlenzone ungenutzt bleibt.

Hieraus ergibt sich, daß die Wärmerückgewinnung in Reforming-Anlagen ein vielschichtiges und komplexes Problem darstellt, da sie sich erstreckt auf

- Vorerwärmung der Kohlenwasserstoffe,

- Erzeugung und Überhitzung von Wasserdampf,
- Vorerwärmung des Kohlenstoffgas/Wasserdampf-Gemisches.

Das bringt die Verwendung von separaten Wärmeaustauschern verschiedener Typen mit sich, die untereinander durch Rohre zur Weiterleitung der Fluide (zu erwärmende Medien und/oder Heizmedien) verbunden sind. Das bedeutet einen entsprechend hohen Aufwand in der Anlagentechnik und somit hohe Kosten.

Aufgabe der Erfindung ist es, den für die Nutzung der in einem Reforming-Prozeß anfallenden Abwärme erforderlichen Anlagenaufwand im Hinblick auf die Erzeugung und Vorwärmung des Kohlenwasserstoffgas/Wasserdampf-Gemisches zu vermindern.

Gelöst wird diese Aufgabe durch ein Verfahren mit den Merkmalen des Patentanspruchs 1; vorteilhafte Weiterbildungen des erfindungsgemäßen Verfahrens sind in den Unteransprüchen 2 bis 9 angegeben. Ein Wärmeaustauscher zur Durchführung dieses Verfahrens ist durch die Merkmale des Patentanspruchs 10 charakterisiert und in den Unteransprüchen 11 bis 17 in vorteilhafter Weise ausgestaltet worden. Im folgenden wird die Erfindung näher beschrieben.

Tragender Gedanke der Erfindung ist es, in einem einzigen Wärmeaustauscher sowohl die Vorwärmung der Kohlenwasserstoffzufuhr als auch die Erzeugung und Überhitzung von Wasserdampf sowie die Erzeugung und Vorwärmung des Kohlenwasserstoffgas/Wasserdampf-Gemisches durchzuführen. Dabei laufen die Vorgänge der Erwärmung der Kohlenwasserstoffe, der Erzeugung von Wasserdampf, der Sättigung der Kohlenwasserstoffe mit Wasserdampf und der weiteren Vorerhitzung des Kohlenwasserstoffgas/Wasserdampf-Gemisches gleichzeitig ab, wobei am Ausgang des Wärmeaustauschers ein vorerhitztes Kohlenwasserstoffgas/Wasserdampf-Gemisch in der gewünschten Zusammensetzung gewonnen wird.

Die im Rahmen der Erfindung zur Aufbereitung des vorerhitzten Kohlenwasserstoffgas/Wasserdampf-Gemisches benötigte Wärme wird im wesentlichen durch die Wärme des bereits erzeugten Reformerproduktes einschließlich des darin enthaltenen Reformerabschlamms geliefert. Sofern eine CO-Konvertierung in der Gesamtanlage vorgesehen ist, kann auch die dabei anfallende Wärme mitgenutzt werden. Bemerkenswert ist, daß auch die Wärme, die in dem bei der Wasserdampferzeugung anfallenden Abschlamm enthalten ist, für die Vorerhitzung nutzbar ist. Nähere Einzelheiten der Erfindung gehen aus der nachfolgenden Beschreibung eines in den Zeichnungen dargestellten Ausführungsbeispiels hervor.

Es zeigen:

Fig. 1 eine schematische Darstellung eines erfindungsgemäßen Wärmeaustauschers und

Fig. 2 den Temperaturverlauf der durch den Wärmeaustaucher geführten Fluide in Abhängigkeit vom Stadium des Wärmeaustauschs.

Der in Figur 1 dargestellte Wärmeaustauscher bestehender Bauart weist im wesentlichen fünf unmittelbar miteinander verbundene Zonen auf, die mit den Ziffern 1 bis 5 bezeichnet sind. Die Basis des Wärmeaustauschers wird durch einen Abscheider 1 gebildet, in dem der Abschlamm des nicht verdampften Wassers gesammelt und über die Leitung 8 abgelassen wird. Im oberen Teil des Abscheiders 1 werden gasförmige Kohlenwasserstoffe über eine Leitung 6 eingeführt. Oberhalb des Abscheiders 1 schließt sich eine mit nach oben verlaufenden Wärmeaustauscherrohren gefüllte untere Wärmeaustauschzone 2 an, in der sich die Kohlenwasserstoffe vorerwärmen und mit Wasserdampf sättigen können, indem sie im Inneren der Wärmeaustauscherrohre nach oben steigen, und zwar im Gegenstrom zum Wasser, das oberhalb der Zone 2 in die Wärmeaustauscherrohre gespritzt wird und nach unten fließt. Als Heizmedium wird heißes CO-Konvertierungsprodukt, also das Reformerprodukt, nachdem dieses eine CO-Konvertierungsanlage durchlaufen hat, von oben nach unten außen über die Wärmeaustauscherrohre geführt. Der Wärmeaustausch zwischen den Kohlenwasserstoffen und dem bereits gebildeten Wasserdampf bzw. dem Gemisch aus beiden einerseits und dem Heizmedium andererseits, welches über die Leitung 13 in den Mantel der Zone 2 ein- und über die Leitung 14 wieder abgeführt wird, erfolgt also im Gegenstrom. Im Inneren der Wärmeaustauscherrohre ist eine Füllung 22 mit Raschig-Ringen und anderem ähnlichem Material vorgesehen, um die Kontaktoberfläche zwischen den gasförmigen Kohlenwasserstoffen und dem eingespritzten entgasten Wasser zu vergrößern und auf diese Weise die Verdampfung des Wassers zu begünstigen. Ein großer Vorteil der gleichzeitigen Erzeugung von Wasserdampf und der Bildung des Kohlenwasserstoffgas/Wasserdampfgemisches ist, daß der Wasserdampf bei geringerer Temperatur erzeugt werden kann als bei separater Erzeugung.

Unmittelbar über der Zone 2 ist eine gleichartig aufgebaute mittlere Wärmeaustauschzone 3 angeordnet, in der sich die gasförmigen Kohlenwasserstoffe weiter erhitzen und sich fortwährend mit Wasserdampf sättigen, bis die gewünschte Wasserdampfkonzentration erreicht ist. Als Heizmedium wird in der Zone 3 heißes Reformerprodukt verwendet, das über die Leitung 11 in den Mantel der Zone 3 ein- und über die Leitung 12 wieder abgeführt wird und dann zur CO-Konvertierungsanlage gelangt. Ebenso wie in der

unteren Zone 2 ist auch in den Wärmeaustauscherrohren der Zone 3 eine Füllung 22 mit Raschig-Ringen oder anderem ähnlichem Material vorgesehen, um die Wasserverdampfung zu begünstigen. Wenn in der Anlage keine CO-Konvertierung vorgesehen ist, können die beiden Zonen 2 und 3 zu einer einzigen Wärmeaustauschzone zusammengefaßt sein.

An die Zone 3 schließt sich eine Wassereinspritzkammer 4 an, in der über eine Leitung 7 das zur Wasserdampferzeugung benötigte entgaste Wasser durch Düsen eingespritzt wird, um in die Wärmeaustauscherrohre der Zonen 2 und 3 fließen zu können.

Am Kopf des Wärmeaustauschers ist eine obere Wärmeaustauschzone 5 angeordnet, in der das Kohlenwasserstoffgas/Wasserdampf-Gemisch, welches sich in den Zonen 2 und 3 gebildet hat und nach Durchströmen der Wassereinspritzkammer 4 in die Wärmeaustauscherrohre der Zone 5 eintritt, weiter nach oben steigt. Das Gemisch wird dabei durch Wärmeaustausch im Gegenstrom mit dem Reformerprodukt, das über die Zuleitung 10 in den Mantel der Zone 5 ein- und über die Leitung 11 wieder austritt, weiter erhitzt. Am oberen Ende der Zone 5 wird das Kohlenwasserstoffgas/ Wasserdampf-Gemisch aus dem Wärmeaustauscher mit der erreichten Endtemperatur der Vorerhitzung über die Leitung 9 abgezogen und kann dem Reforming-Reaktor zugeführt werden.

Die Menge der unten in den Wärmeaustauscher eingeführten gasförmigen Kohlenwasserstoffe wird von einem Mengenregler FC-1 bestimmt, der auf ein Regelventil 17 wirkt. Die Menge des oben zugeführten entgasten Wassers wird vom Mengenregler FC-2 reguliert, der auf das Regelventil 18 wirkt. Der Mengenregler FC-1 bewirkt außerdem die Einstellung des Sollwertes des Reglers FC-2, wodurch auch im Falle von Mengenänderungen in der Wasserstoffgas-Zufuhr das Verhältnis zwischen Kohlenwasserstoff- und Wassermenge konstant gehalten wird.

Die Eintrittstemperatur bei der CO-Konvertierung wird durch den Temperaturregler TC-1 geregelt. Hierzu wirkt der Regler TC-1 auf ein Regelventil 15 in der Bypass-Leitung 11′, die von der Reformerproduktableitung 11 abzweigt und bei Bedarf einen Teil des Reformerproduktes unter Umgehung der Zone 3 direkt in die Zuleitung 12 der CO-Konvertierungsanlage einleitet.

Die Wasserdampfkonzentration des Kohlenwasserstoffgas/Wasserdampf-Gemisches, das dem Reformer zugeleitet werden soll, wird vom Temperaturregler TC-2 geregelt. Dies wird dadurch erreicht, daß die Sättigungstemperatur des Kohlenwasserstoffgas/Wasserdampf-Gemisches beim Austritt aus der mittleren Zone 3 des Wärmeaustauschers auf einem bestimmten Wert gehalten wird. Hierzu wird die Menge des durch die Zone 2 strömenden Heizmediums (CO-Konvertierungsprodukt) entsprechend eingestellt, indem die CO-Konvertierungsproduktmenge in der zwischen der Zuleitung 13 und der Ableitung 14 liegenden Bypass-Leitung 13′ zur Umgehung der Zone 2 des Wärmeaustauschers mittels des Regelventils 16 geregelt wird.

Der Sollwert des Reglers TC-2 wird seinerseits kompensiert, um der Änderung der Sättigungstemperatur mit dem Betriebsdruck mittels des vom Druckübermittler PT-1 übermittelten Signals Rechnung zu tragen. Der Druckübermittler PT-1 ist an die Wassereinspritzkammer 4 angeschlossen.

Der Abscheider 1 ist mit einem Füllstandsregler LC-1 ausgestattet, welcher auf das Regelventil 19 in der Abschlammleitung 8 wirkt.

Die Zahlenwerte der wesentlichen Prozeßparameter der Wärmerückgewinnung sind für ein Ausführungsbeispiel, das sich auf eine Anlage zur Herstellung von Wasserstoffgas gemäß Figur 1 bezieht, aus Tabelle 1 entnehmbar.

Aus Figur 2 ergibt sich für das Ausführungsbeispiel der Temperaturverlauf der verschiedenen Medien beim Durchlaufen der verschiedenen Wärmeaustauscherzonen. Das mit dem etwa 660 Grad C in den oberen Teil der Zone 5 als Heizmedium einströmende Reformerprodukt kühlt sich durch den Wärmeaustausch bis zum Erreichen des Ausgangs 12 aus der mittleren Zone 3 kontinuierlich bis auf 350 Grad C ab.

Mit dieser Temperatur geht das Reformerprodukt in die CO-Konvertierungsanlage und erwärmt sich dort bis auf etwa 412 Grad C. Das ist gleichzeitig die Eintrittstemperatur des CO-Konvertierungsproduktes am Eingang der Zone 2. In dieser Zone 2 kühlt sich das CO-Konvertierungsprodukt zunächst kontinuierlich bis auf etwa 150 Grad C ab. In dem untersten Teil der Zone 2 findet nur noch eine relativ schwache Abkühlung um wenige Grad C statt. Umgekehrt ist die Erwärmung des Reformereinsatzes im unteren Teil der Wärmeaustauschzone 2 besonders stark. Es handelt sich dabei im wesentlichen um die Erwärmung des mit einer Anfangstemperatur von etwa 40 Grad C zugeführten Methangases, wofür nur vergleichsweise geringe Wärmemengen benötigt werden. Mit zunehmender Höhe im Wärmeaustauscher verlangsamt sich die Temperaturerhöhung, da die ausgetauschten Wärmemengen im wesentlichen für die Wasserverdampfung benötigten werden. Am oberen Ende der Wärmeaustauschzone 3 beträgt die Temperatur etwa 190 Grad C. In der oberen Wärmeaustauschzone 5 ist der Temperaturanstieg wieder steiler, da dort keine Verdampfungsarbeit mehr zu leisten ist, so daß das Kohlenwasserstoffgas/Wasserdampf-Gemisch für den Reformereinsatz eine Endaufheiztemperatur von etwa 207 Grad C erreicht.

Mit dem erfindungsgemäßen Verfahren bzw. dem erfindungsgemäßen Wärmeaustauscher sind insbesondere folgende Vorteile verbunden:

- Ersatz der bisher nach dem Stand der Technik erforderlichen verschiedenen Wärmeaustauscher für die Wasserdampferzeugung und die Vorwärmung des Kohlenwasserstoffgases bzw. des Kohlenwasserstoffgas/Wasserdampf-Gemischs durch einen einzigen Wärmeaustauscher und Einsparung der zu deren Verbindung an sich benötigten Rohre. Daraus ergeben sich Einsparungen hinsichtlich des Platzbedarfs und der Investitionskosten.
- Erzeugung von Wasserdampf bei niedrigeren Temperaturen als den in bisherigen Dampferzeugeranlagen üblichen. Dadurch wird die Nutzung von Abwärme geringeren Temperaturniveaus ermöglicht.
- Möglichkeit der Rückgewinnung einer größeren Wärmemenge aus dem Reformerprodukt und ggfs. aus dem CO-Konvertierungsprodukt, d. h. Erhöhung des Wirkungsgrades der Wärmerückgewinnung.
- Möglichkeit der Zulassung größerer Schlamm-Mengen als in bisherigen Anlagen, ohne daß damit Beeinträchtigungen des thermischen Wirkungsgrades der Dampferzeugung in Kauf genommen werden müssen, da auch die Abwärme aus dem Abschlamm zurückgewonnen wird.
- Möglichkeit zum Einsatz von Wasser mit schlechterer Qualität als der, die bisher für die Dampferzeugung in den heutigen Anlagen erforderlich ist.

Tabelle 1

ZAHLENWERTE

| | | |
|---|---|---|
| Einsatz gasförmiger Kohlenwasserstoffe: | $CH_4$ | 100,00 Kmol/h |
| | Temperatur | 40 °C |
| | Druck | 18,0 Bar |
| Eingesetztes Wasser: | $H_2O$ | 341,25 Kmol/h |
| | Temperatur | 189 °C |
| | Druck | 17,9 Bar |
| Reformer-Produkt beim Einsatz in Wärmeaustauscherzone 5: | $CH_4$ | 18,40 Kmol/h |
| | $CO_2$ | 33,65 " |
| | CO | 47,95 " |
| | $H_2$ | 278,45 " |
| | $H_2O$ | 209,75 " |
| | Temperatur | 660 °C |
| | Druck | 16,8 Bar |
| CO-Konvertierungs-Produkt vor Einsatz in Wärmeaustauscher-zone 2: | $CH_4$ | 18,40 Kmol/h |
| | $CO_2$ | 66,88 " |
| | CO | 14,72 " |
| | $H_2$ | 311,68 " |
| | $H_2O$ | 176,52 " |
| | Temperatur | 412 °C |
| | Druck | 16,5 Bar |
| Vorgewärmtes Einsatzgemisch für Reforming-Prozeß: | $CH_4$ | 100,00 Kmol/h |
| | $H_2O$ | 325,00 " |
| | Temperatur | 207 °C |
| | Druck | 18,0 Bar |

| | | |
|---|---|---|
| Abschlamm im Abscheider 1: | $H_2O$ | 16,25 Kmol/h |
| | Temperatur | 40 °C |
| | Druck | 18,0 Bar |
| Wärmeaustausch : | obere Zone 5 | 1.560.000 Kcal/h |
| | mittlere Zone 3 | 1.420.000 " |
| | untere Zone 2 | 130.000 " |
| | insgesamt | 3.110.000 " |

**Patentansprüche**

1. Verfahren zur kontinuierlichen Erzeugung und Vorerhitzung eines Kohlenwasserstoffgas/Wasserdampf-Gemisches als Einsatzstoff für einen Reforming-Prozeß zur Herstellung von Wasserstoffgas oder Synthesegas (Reformerprodukt),
dadurch gekennzeichnet,
daß die Vorwärmung der Kohlenwasserstoffe, die Erzeugung des Wasserdampfs und die weitere Erhitzung des Kohlenwasserstoffgas/Wasserdampf-Gemisches in einem einzigen Wärmeaustauscher, in dem das Heizmedium durch Trennwände gegen das zu erwärmende Fluid (Kohlenwasserstoffe, Wasser, Wasserdampf) abgetrennt ist, erfolgen, wobei das Wasser des Wasserdampfanteils in flüssiger Form in den Wärmeaustauscher eingespritzt und bei gleichzeitiger zumindest teilweiser Verdampfung mit dem durch den Wärmeaustauscher geführten Strom der Kohlenwasserstoffe in direkten Kontakt gebracht wird.

2. Verfahren nach Anspruch 1,
dadurch gekennzeichnet,
daß die Kohlenwasserstoffe bzw. das Kohlenwasserstoffgas/Wasserdampf-Gemisch im Gegenstrom zum Heizmedium durch den Wärmeaustauscher geführt werden.

3. Verfahren nach Anspruch 1 oder 2,
dadurch gekennzeichnet,
daß das eingespritzte Wasser unter Ausnutzung der Schwerkraft zur Vergrößerung der Kontaktoberfläche zwischen Wasser und Kohlenwasserstoffgas über Rieselkörper, die durch das Heizmedium erwärmt werden, geführt wird, wobei der Strom der Kohlenwasserstoffe bzw. des bereits gebildeten Kohlenwasserstoffgas/Wasserdampf-Gemisches dem Strom des rieselnden Wassers entgegengerichtet ist.

4. Verfahren nach einem der Ansprüche 1 - 3,
dadurch gekennzeichnet,
daß das zu erwärmende Fluid unter Überdruck durch den Wärmeaustauscher geführt wird.

5. Verfahren nach einem der Ansprüche 1 - 4,
dadurch gekennzeichnet,
daß das Wasser vor dem Einspritzen unter Überdruck auf eine Temperatur oberhalb 100 ° C, insbesondere bei einem Druck über 15 bar auf über 150 ° C vorgewärmt wird.

6. Verfahren nach einem der Ansprüche 1 - 5,
dadurch gekennzeichnet,
daß die Menge des eingespritzten Wassers größer als die benötigte Wasserdampfmenge gewählt wird und daß das überschüssige Wasser im Wärmeaustauscher gesammelt und zusammen mit den darin

gelösten oder suspendierten Verunreinigungen bei geringer Temperatur, insbesondere unter 50 ° C, aus dem Wärmeaustauscher abgeleitet wird.

**7.** Verfahren nach einem der Ansprüche 1 - 6,
dadurch gekennzeichnet,
daß als Heizmedium das Reformerprodukt durch den Wärmeaustauscher geleitet wird.

**8.** Verfahren nach Anspruch 7,
dadurch gekennzeichnet,
daß das Reformerprodukt zur zusätzlichen Umwandlung von Kohlenmonoxid und Wasserdampf in Kohlendioxid und Wasserstoffgas aus dem Wärmeaustauscher in eine Konvertierungsstufe geführt und danach zur Ausnutzung der in der exothermen Reaktion angefallenen Wärme wieder in den Wärmeaustauscher zurückgeleitet wird.

**9.** Verfahren nach einem der Ansprüche 1 - 8,
dadurch gekennzeichnet,
daß der Wärmeaustausch so geführt wird, daß der erzeugte Wasserdampf mit den gleichzeitig erwärmten Kohlenwasserstoffen in einem Mengenverhältnis steht, welches der gewünschten Zusammensetzung für den Reforming-Prozeß entspricht.

**10.** Wärmeaustauscher stehender Bauart, zur Durchführung des Verfahrens nach Anspruch 1, in dessen Gehäuse das zu erwärmende Fluid oder das Heizmedium in Rohren geführt ist,
dadurch gekennzeichnet,
daß der Wärmeaustauscher aus mindestens vier übereinander angeordneten und hinsichtlich der Durchleitung des zu erwärmenden Fluids miteinander verbundenen Zonen (1, 3, 4, 5) aufgebaut ist, daß die unterste der Zonen als Abscheider (1) ausgebildet ist und an eine Abschlammleitung (8) für den Abzug von Schlamm angeschlossen ist,
daß über dem Abscheider (1) eine Wärmeaustauschzone (3) angeordnet ist, in die von unten über eine Gaszuleitung (6), welche entweder an den Abscheider (1) oder unmittelbar an die Wärmeaustauschzone (3) angeschlossen ist, gasförmige Kohlenwasserstoffe einleitbar sind,
daß über der unteren Wärmeaustauschzone (3) eine Wassereinspritzzone (4) angeordnet ist, von der aus Wasser, welches durch eine Wasserleitung (7) zuführbar ist, in die von den Kohlenwasserstoffen durchströmten Bereiche der Wärmeaustauschzone (3) einspritzbar ist und
daß über der Wassereinspritzzone (4) eine obere Wärmeaustauschzone (5) angeordnet ist, in der das Gemisch aus den Kohlenwasserstoffen und dem Wasserdampf weiter erhitzbar und nach oben durch eine Ableitung (9) abziehbar ist.

**11.** Wärmeaustauscher nach Anspruch 10,
dadurch gekennzeichnet,
daß das Heizmedium in den oberen Teil der oberen Wärmeaustauschzone (5) durch eine Zuleitung (10) einleitbar, im Gegenstrom zu den Kohlenwasserstoffen durch den Wärmeaustauscher führbar und aus dem unteren Teil der Wärmeaustauschzone (3) über eine Leitung (12) abziehbar ist.

**12.** Wärmeaustauscher nach Anspruch 10 oder 11,
dadurch gekennzeichnet,
daß zwischen der Wärmeaustauschzone (3) und dem Abscheider (1) eine weitere, untere Wärmeaustauschzone (2) angeordnet ist, in deren oberen Teil das aus der Wärmeaustauschzone (3) abgezogene Heizmedium nach Durchlaufen einer Behandlungsstation, insbesondere (bei Verwendung von heißem Reformerprodukt als Heizmedium) nach Durchlaufen einer Kohlenmonoxid-Konvertieranlage, durch die Zuleitung (13) einleitbar ist und aus deren unterem Teil das Heizmedium durch die Ableitung (14) ableitbar ist.

**13.** Wärmeaustauscher nach Anspruch 12,
dadurch gekennzeichnet,
daß für das Heizmedium eine Bypass-Leitung (11′) zwischen der Ableitung (11) aus der oberen Wärmeaustauschzone (5) und der Ableitung (12) aus der Wärmeaustauschzone (3) vorgesehen ist.

**14.** Wärmeaustauscher nach Anspruch 12 oder 13,
dadurch gekennzeichnet,
daß für das Heizmedium eine Bypass-Leitung (13′) zwischen der Zuleitung (13) und der Ableitung (14) der unteren Wärmeaustauschzone (2) vorgesehen ist.

**15.** Wärmeaustauscher nach einem der Ansprüche 10 - 14,
dadurch gekennzeichnet,
daß die für die Durchleitung der Kohlenwasserstoffe und des Wassers bzw. Wasserdampfes durch den Wärmeaustauscher bestimmten Rohre mit Rieselkörpern zur Vergrößerung der Kontaktoberfläche, insbesondere mit Raschig-Ringen (20) gefüllt sind.

**16.** Wärmeaustauscher nach einem der Ansprüche 10 - 15,
dadurch gekennzeichnet,
daß mindestens in den Bypass-Leitungen (11′, 13′) und in der Gaszuleitung (6), der Wasserleitung (7) sowie der Abschlammleitung (8) Ventile (15, 16, 17, 18, 19) eingebaut sind, deren Durchflußmengen automatisch regelbar sind.

**17.** Wärmeaustauscher nach Anspruch 16,
dadurch gekennzeichnet,
daß die Sollwertvorgabe für die Regelung des Wassereinlaßventils (18) an die Durchlflußmenge des Gaseinlaßventils (17) gekoppelt ist, daß die Durchflußmenge des Bypassventils (15) entsprechend der Temperatur in der Ableitung (12) geregelt ist, daß die Durchflußmenge des Bypassventils (16) anhand der Temperatur und des Drucks in der Wassereinspritzzone (4) geregelt ist und daß das Ventil (19) in der Abschlammleitung (8) anhand des Füllstandes im Abscheider (1) geregelt ist.

## Claims

**1.** A method for the continuous production and preheating of a hydrocarbon gas/steam mixture as a charge material for a reforming process for the production of hydrogen gas or synthesis gas (reformer product),
characterised in that
the preheating of the hydrocarbons, the generation of the steam and the further heating of the hydrocarbon gas/steam mixture take place in a single heat-exchanger, in which the heating medium is separated from the fluid to be heated (hydrocarbons, water, steam) by partitions, the water of the steam fraction being sprayed into the heat exchanger in liquid form and being brought into direct contact with the stream of hydrocarbons which is guided through the heat exchanger with simultaneous, at least partial, evaporation.

**2.** A method according to Claim 1, characterised in that the hydrocarbons or the hydrocarbon gas/steam mixture is passed through the heat exchanger in a counter-current to the heating medium.

**3.** A method according to Claim 1 or 2, characterised in that the water sprayed in is passed through trickle members which are heated by the heating medium, utilising gravity to increase the contact surface between water and hydrocarbon gas, the stream of the hydrocarbons or the already-formed hydrocarbon gas/steam mixture being counter to the stream of the trickling water.

**4.** A method according to one of Claims 1 - 3, characterised in that the fluid to be heated is passed through the heat exchanger under excess pressure.

**5.** A method according to one of Claims 1 - 4, characterised in that the water before being sprayed in is preheated to a temperature above 100 °C under excess pressure, in particular to above 150 °C at a pressure of over 15 bar.

**6.** A method according to one of Claims 1 - 5, characterised in that the quantity of water sprayed in is greater than the quantity of steam required and that the excess water is collected in the heat exchanger and is discharged from the heat exchanger, together with the impurities dissolved or suspended therein, at a low temperature, in particular below 50 °C.

**7.** A method according to one of Claims 1 - 6, characterised in that the reformer product is passed through the heat exchanger as the heating medium.

**8.** A method according to Claim 7, characterised in that the reformer product, for the additional conversion of carbon monoxide and steam into carbon dioxide and hydrogen gas, is passed out of the heat exchanger and into a conversion stage and thereafter is passed back again into the heat exchanger in order to utilise the heat produced in the exothermic reaction.

**9.** A method according to one of Claims 1 - 8, characterised in that the heat exchange is performed such that the steam generated is in a quantitative ratio with the simultaneously heated hydrocarbons which corresponds to the desired composition for the reforming process.

**10.** A heat exchanger of vertical construction, for performing the method according to Claim 1, within the housing of which the fluid which is to be heated or the heating medium is guided in tubes, characterised in that the heat exchanger is constructed of at least four zones (1, 3, 4, 5) which are arranged one above the other and are connected together with respect to the passing-through of the fluid which is to be heated, that the lowermost of the zones is designed as a separator (1) and is connected to a waste sludge line (8) for removing sludge,
that a heat-exchange zone (3) is located above the separator (1), into which zone the gaseous hydrocarbons can be introduced from below via a gas feed pipe (6) which is either connected to the separator (1) or directly to the heat-exchange zone (3),
that a water-spraying zone (4) is located above the lower heat-exchange zone (3), from which zone (4) water which can be supplied through a water pipe (7) can be sprayed into the regions of the heat-exchanger zone (3) through which the hydrocarbons flow and
that an upper heat-exchange zone (5) is located above the water-spraying zone (4), in which zone (5) the mixture of the hydrocarbons and the steam can be further heated and can be withdrawn at the top through a discharge pipe (9).

**11.** A heat exchanger according to Claim 10, characterised in that the heating medium can be introduced into the upper portion of the upper heat-exchange zone (5) through a feed pipe (10), can be passed through the heat-exchanger in a counter-current to the hydrocarbons and can be removed from the lower portion of the heat-exchange zone (3) via a line (12).

**12.** A heat exchanger according to Claim 10 or 11, characterised in that an additional, lower heat-exchange zone (2) is located between the heat-exchange zone (3) and the separator (1), in the upper portion of which zone (2) the heating medium which has been withdrawn from the heat-exchange zone (3), after passing through a treatment station, in particular (if hot reformer product is used as heating medium) after passing through a carbon monoxide-converting installation, can be introduced through line (13), and out of the lower portion of which the heating medium can be discharged through the discharge pipe (14).

**13.** A heat exchanger according to Claim 12, characterised in that a bypass line (11') between the discharge pipe (11) from the upper heat-exchange zone (5) and the discharge pipe (12) from the heat-exchange zone (3) is provided for the heating medium.

**14.** A heat exchanger according to Claim 12 or 13, characterised in that a bypass line (13') between the feed pipe (13) and the discharge pipe (14) of the lower heat-exchange zone (2) is provided for the heating medium.

**15.** A heat exchanger according to one of Claims 10 - 14, characterised in that the tubes intended for passing the hydrocarbons and the water or steam through the heat exchanger are filled with trickle members for increasing the contact surface, in particular with Raschig rings (20).

**16.** A heat exchanger according to one of Claims 10 - 15, characterised in that valves (15, 16, 17, 18, 19) are installed at least in the bypass lines (11', 13') and in the gas feed pipe (6), the water pipe (7) and the waste sludge line (8), the throughflow rates of which valves can be controlled automatically.

17. A heat exchanger according to Claim 16, characterised in that the setting of desired values for controlling the water inlet valve (18) is connected to the throughflow rate of the gas inlet valve (17), that the throughflow rate of the bypass valve (15) is controlled corresponding to the temperature in the discharge pipe (12), that the throughflow rate of the bypass valve (16) is controlled using the temperature and the pressure in the water-spraying zone (4) and that the valve (19) in the waste sludge line (8) is controlled by means of the level in the separator (1).

**Revendications**

1. Procédé pour le préchauffage et la formation en continu d'un mélange hydrocarbures gazeux-vapeur d'eau, en tant que réactif pour un processus de reformage pour fabriquer du gaz hydrogène ou du gaz synthétique (produit de reformage), caractérisé en ce que le préchauffage des hydrocarbures, la formation de la vapeur d'eau, et le chauffage ultérieur du mélange hydrocarbures gazeux-vapeur d'eau ont lieu dans un échangeur thermique unique dans lequel le fluide de chauffage est isolé du fluide à chauffer (hydrocarbures, eau, vapeur d'eau) par des parois de séparation, l'eau de la portion de vapeur d'eau étant pulvérisée sous forme liquide dans l'échangeur thermique et étant amenée en contact direct avec le courant des hydrocarbures, guidé à travers l'échangeur thermique, en se vaporisant simultanément au moins partiellement.

2. Procédé selon la revendication 1,
caractérisé en ce que les hydrocarbures ou le mélange hydrocarbures gazeux-vapeur d'eau sont guidés à contre-courant vers le fluide de chauffage à travers l'échangeur thermique.

3. Procédé selon la revendication 1 ou 2,
caractérisé en ce que l'eau pulvérisée est guidée sur des corps de ruissellement, qui sont réchauffés par le fluide de chauffage, en exploitant la force de gravité, pour augmenter la surface de contact entre l'eau et l'hydrocarbure gazeux, le courant des hydrocarbures ou du mélange hydrocarbures gazeux-vapeur d'eau déjà formé s'écoulant en sens inverse par rapport au courant de l'eau qui ruisselle.

4. Procédé selon une des revendications 1 à 3,
caractérisé en ce que le fluide à réchauffer est guidé à travers l'échangeur thermique sous une surpression.

5. Procédé selon une des revendications 1 à 4,
caractérisé en ce que l'eau, avant la pulvérisation, est préchauffée sous une surpression à une température supérieure à 100 ° C, en particulier, pour une pression supérieure à 15 bars, à plus de 150 ° C.

6. Procédé selon une des revendications 1 à 5,
caractérisé en ce que la quantité de l'eau pulvérisée est choisie plus grande que la quantité de vapeur d'eau nécessaire, et en ce que l'eau en excès est collectée dans l'échangeur thermique et est évacuée de l'échangeur thermique, en même temps que les impuretés qui y sont dissoutes ou en suspension, à une température plus faible, en particulier inférieure à 50 ° C.

7. Procédé selon une des revendications 1 à 6,
caractérisé en ce que le produit de reformage est guidé à travers l'échangeur thermique, en tant que fluide de chauffage.

8. Procédé selon la revendication 7,
caractérisé en ce que le produit de reformage est amené dans une étape de conversion pour la transformation supplémentaire du monoxyde de carbone et de la vapeur d'eau en dioxyde de carbone,et en gaz hydrogène et, ensuite, il est ramené dans l'échangeur thermique pour exploiter la chaleur produite pendant la réaction exothermique.

9. Procédé selon une des revendications 1 à 8,
caractérisé en ce que l'échange thermique est mené de sorte que la vapeur d'eau créée présente, par rapport aux hydrocarbures en même temps réchauffés, un rapport quantitatif qui correspond à la composition souhaitée pour le processus de reformage.

**10.** Echangeur thermique du type vertical, pour la mise en oeuvre du procédé selon la revendication 1, dans le carter duquel le fluide à chauffer ou le fluide de chauffage est guidé dans des tubes, caractérisé en ce que l'échangeur thermique est constitué d'au moins quatre zones (1,3,4,5) agencées l'une au-dessus de l'autre et reliées l'une à l'autre en ce qui concerne le passage du fluide à réchauffer, en ce que la zone la plus inférieure est réalisée en tant que séparateur (1) et est raccordée à un conduit (8) pour l'évacuation des boues, en ce que, au-dessus du séparateur (1), est agencée une zone d'échange thermique (3), dans laquelle peuvent être amenés des hydrocarbures gazeux, du bas, par l'intermédiaire d'un conduit de gaz (6) qui est raccordé soit au séparateur (1), soit directement à la zone d'échange thermique inférieure (3), en ce que, au-dessus de la zone d'échange thermique inférieure (3), est agencée une zone de pulvérisation d'eau (4), à partir de laquelle de l'eau, qui peut être fournie par une conduite d'eau (7), peut être pulvérisée dans les parties de la zone d'échange thermique (3) traversées par les hydrocarbures, et en ce que, au-dessus de la zone de pulvérisation d'eau (4), est agencée une zone d'échange thermique supérieure (5), dans laquelle le mélange d'hydrocarbures et de vapeur d'eau peut être encore chauffé et être évacué vers le haut par un conduit (9).

**11.** Echangeur thermique selon la revendication 10, caractérisé en ce que le fluide de chauffage peut être introduit dans la partie supérieure de la zone d'échange thermique supérieure (5) par un conduit (10), peut être guidé à travers l'échangeur thermique à contre-courant par rapport aux hydrocarbures, et peut être évacué de la partie inférieure de la zone d'échange thermique (3) par un conduit (12).

**12.** Echangeur thermique selon la revendication 10 ou 11, caractérisé en ce que, entre la zone d'échange thermique (3) et le séparateur (1), est agencée une autre zone d'échange thermique inférieure (2), dans la partie supérieure de laquelle le fluide de chauffage retiré de la zone d'échange thermique (3) peut être introduit par le conduit (13), après avoir traversé un poste de traitement, en particulier (dans le cas où le produit de reformage chaud est utilisé en tant que fluide de chauffage) après avoir traversé une installation de conversion du monoxyde de carbone, et à partir de la partie inférieure de laquelle le fluide de chauffage peut être évacué par le conduit (14).

**13.** Echangeur thermique selon la revendication 12, caractérisé en ce qu'un conduit de dérivation (11'), pour le fluide de chauffage, est prévu entre le conduit (11) sortant de la zone d'échange thermique supérieure (5) et le conduit (12) sortant de la zone d'échange thermique (3).

**14.** Echangeur thermique selon la revendication 12 ou 13, caractérisé en ce qu'un conduit de dérivation (13'), pour le fluide de chauffage, est prévu entre le conduit d'entrée (13) et le conduit de sortie (14) de la zone d'échange thermique inférieure (2).

**15.** Echangeur thermique selon une des revendications 10 à 14, caractérisé en ce que les tubes destinés à conduire les hydrocarbures et l'eau ou la vapeur d'eau à travers l'échangeur thermique, sont remplis de corps de ruissellement pour augmenter la surface de contact, en particulier d'anneaux Raschig (20).

**16.** Echangeur thermique selon une des revendications 10 à 15, caractérisé en ce qu'au moins dans les conduits de dérivation (11',13') et dans le conduit d'amenée de gaz (6), le conduit d'eau (7), ainsi que le conduit (8) d'évacuation des boues, sont montées des vannes (15,16,17,18,19), dont les débits sont automatiquement réglables.

**17.** Echangeur thermique selon la revendication 16, caractérisé en ce que la valeur de consigne pour le réglage de la vanne d'arrivée d'eau (18) est couplée au débit de la vanne d'arrivée de gaz (17), en ce que le débit de la vanne de dérivation (15) est réglé de façon correspondant à la température dans le conduit de sortie (12), en ce que le débit de la vanne de dérivation (16) est réglé en fonction de la température et de la pression dans la zone de pulvérisation d'eau (4), et en ce que la vanne (19) dans le conduit (8) d'évacuation des boues est réglée en fonction de l'état de remplissage du séparateur (1).

Fig.1

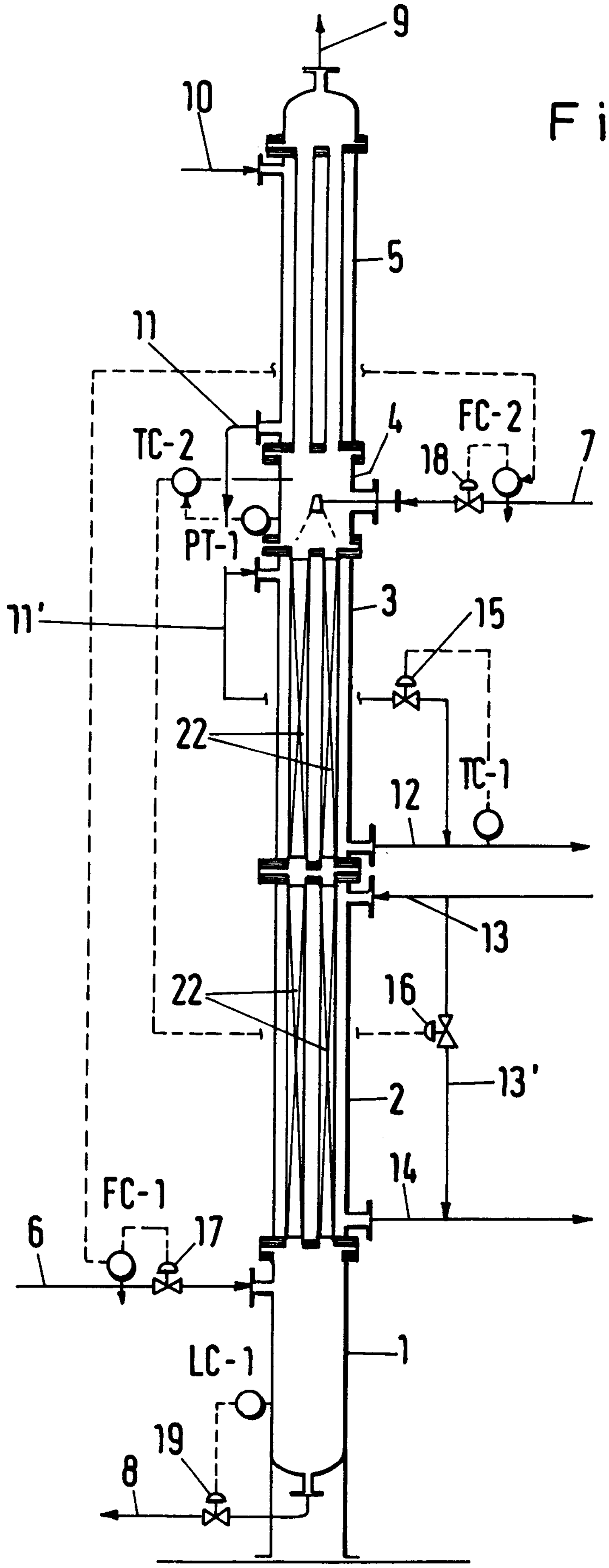
9
10
5
11
4
FC-2
TC-2
18
7
PT-1
3
15
11'
22
TC-1
12
13
22
16
13'
2
14
FC-1
17
6
1
LC-1
19
8

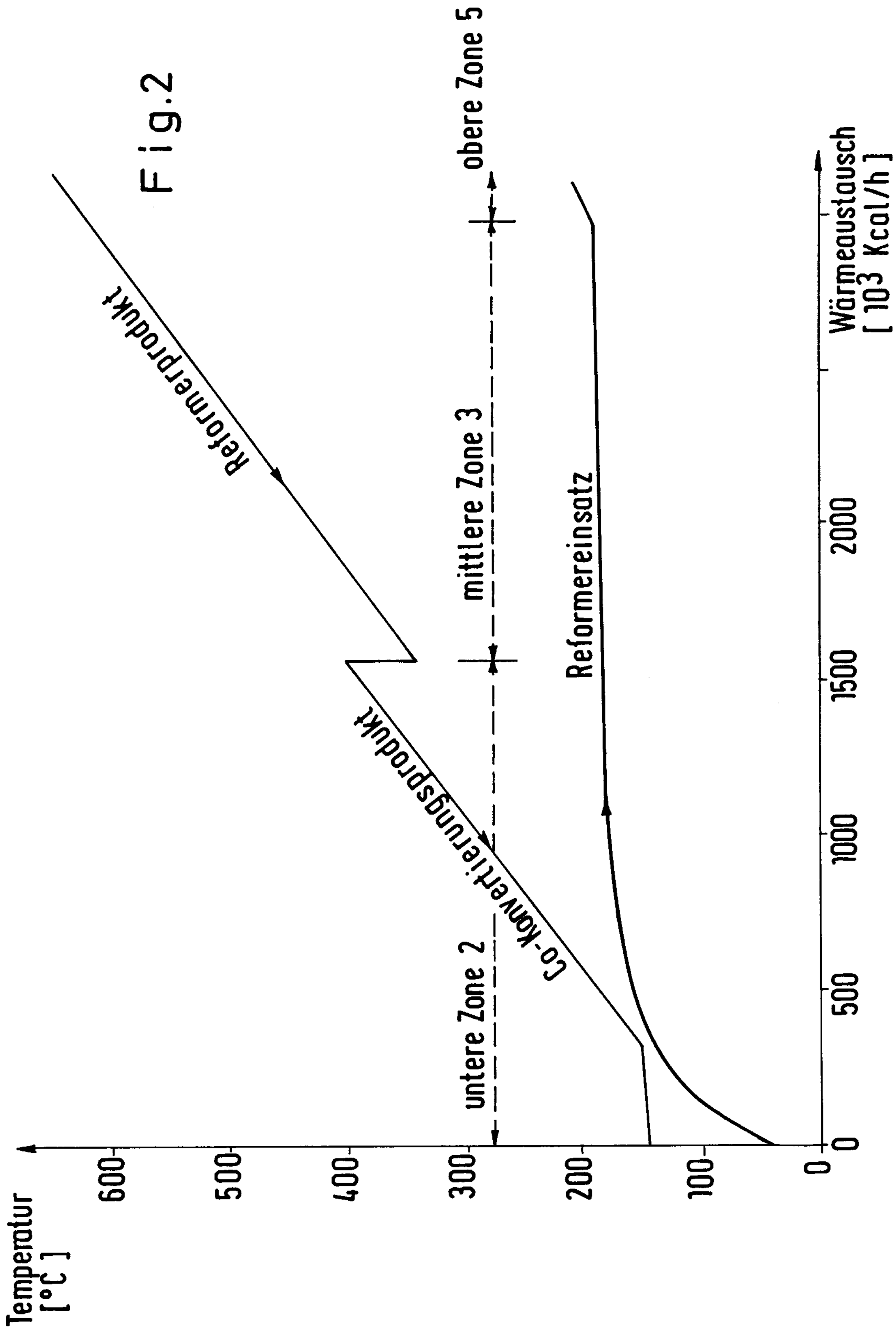
Temperatur
[°C]
600
500
400
300
200
100
0
Wärmeaustausch
[10³ Kcal/h]
0
500
1000
1500
2000
untere Zone 2
mittlere Zone 3
obere Zone 5
Reformerprodukt
Co-Konvertierungsprodukt
Reformereinsatz

Fig.2